# EUROPEAN PATENT SPECIFICATION

(11) **EP 3 999 828 B1**
(45) Date of publication and mention of the grant of the patent: **04.01.2023**
(21) Application number: 20828764.9
(22) Date of filing: 27.11.2020
(51) Int. Cl.: G01L 1/22, G01L 3/24, G01L 5/161, G01L 5/22, B62M 3/16, B62J 45/411, B62J 45/421

(54) **BICYCLES PEDAL**
FAHRRADPEDAL
PÉDALE DE BICYCLETTE

(30) Priority: 29.11.2019 IT 201900022536
(43) Date of publication of application: 25.05.2022
(73) Proprietor: FAVERO ELECTRONICS S.R.L., 31030 Arcade (TV) (IT)
(72) Inventor: FAVERO, Gino, 31030 Arcade (TV) (IT)
(74) Representative: Studio Torta S.p.A.
(86) International application number: PCT/IB2020/061234
(87) International publication number: WO 2021/105951

(56) References cited:
- US-A1- 2010 024 590
- US-A1- 2012 173 167
- US-A1- 2016 052 583

## Description

### CROSS-REFERENCE TO RELATED APPLICATIONS

This patent application claims priority from Italian patent application no. 102019000022536 filed on 29/11/2019.

### TECHNICAL FIELD

The present invention relates to a pedal for bicycles. In particular, the present invention refers to a bicycle pedal which is provided with an electronic measuring apparatus designed to measure the power generated/exerted by a cyclist while pedalling.

### BACKGROUND ART

The use in bicycles, especially racing/road bicycles, of electronic measurement systems that determine and display a series of parameters/quantities useful for monitoring the physical activity carried out by the cyclist while pedalling, generally the force/power exerted by the foot on the pedal body and/or the pedalling cadence, is well known.

The electronic measurement systems comprise electronic measuring apparatuses arranged on a pedal for measuring the aforementioned parameters so as to transmit them in the form of data to a user interface device.

The electronic measuring apparatuses comprise one or more Wheatstone bridge electrical measurement circuits, which are provided with a series of strain gauges generally coupled to the pedal-pin.

In use, the Wheatstone bridge electrical measurement circuits provide, on the basis of the resistive variation of the strain gauges, electrical measurement signals, the values of which are indicative of the axial deformation caused on the pedal-pin by the force exerted by the cyclist during pedalling.

Some types of electronic measuring apparatuses have a so-called "dual-axis" circuit architecture, i.e., configured to measure the deformation of the pedal-pin with respect to two measurement axes, which are perpendicular to each other and lie on a plane orthogonal to the longitudinal axis of the pedal-pin.

The aforesaid electronic measuring apparatuses are provided with two Wheatstone bridge measurement circuits, each of which is suitable for measuring the deformation of the pedal-pin on one of the measurement axes mentioned above.

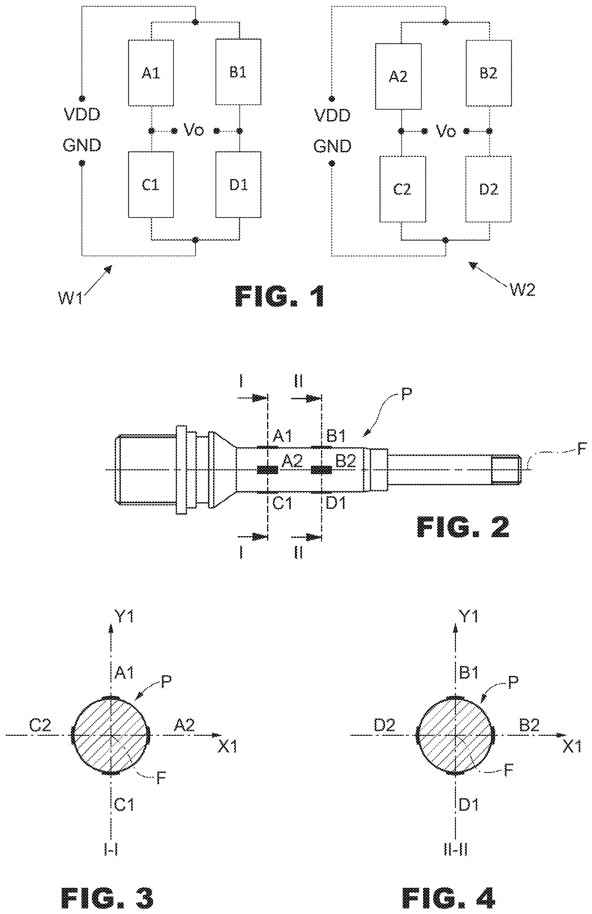

Figures 1-4 show an example of two Wheatstone bridge measurement circuits, wherein the first measurement circuit W1 comprises a first pair of strain gauges A1,B1 which are aligned and parallel to the longitudinal axis F of the pedal-pin P, and a second pair of strain gauges C1,D1 which are aligned and parallel to the longitudinal axis F of the pedal-pin P and are arranged in diametrically opposite positions with respect to the strain gauges A1,B1 of the first pair; similarly, the second measurement circuit W2 comprises a third pair of aligned strain gauges A2,B2 parallel to the longitudinal axis F, and a fourth pair of aligned strain gauges C2,D2 parallel to the longitudinal axis F and arranged in diametrically opposite positions with respect to the strain gauges A2,B2 of the third pair.

In particular, the strain gauges A1, B1, C1, D1 are arranged on a centre-line plane of the pedal-pin P in order to measure the deformation with respect to a first measurement axis Y1; the strain gauges A2, B2, C2, D2 are instead arranged on a plane orthogonal to the centre-line plane of the pedal-pin P in order to measure the deformation with respect to a second measurement axis X1, orthogonal to the first measurement axis Y1 (Figures 3 and 4).

As shown in Figure 3, the strain gauges A1 and C1 of the first measurement circuit W1 and the strain gauges A2 and C2 of the second measurement circuit W2 are angularly equidistant from each other by an angle of approximately 90° on the pedal-pin P around the longitudinal axis F; moreover, the strain gauges B1 and D1 of the first measurement circuit W1 and the strain gauges B2 and D2 of the second measurement circuit W2 are angularly equidistant from each other by an angle of approximately 90° around the longitudinal axis F (Figure 4).

Each strain gauge belonging to the first and the second pair of strain gauges of the first measurement circuit W1 is therefore angularly interleaved/interposed, i.e., arranged on the pedal-pin P, between two strain gauges of the third or fourth pair of the second measurement circuit W2, and vice versa.

The above-described interleaved angular distribution of the strain gauges of the two measurement circuits on the pedal-pin P may be inconvenient when it is required that the same occupy less space on the outer surface of the pedal-pin. Unfortunately, this requirement has not yet been satisfactorily met.

The aforesaid interleaved positioning of the strain gauges on the pedal-pin also entails an increase in the circuit complexity, in particular as regards the electrical connections between the strain gauges in the making of measurement circuits. This complexity has a significant effect on the overall costs of the measuring apparatus.

US 2016 0 052 583 A1 describes a bicycle pedal comprising a first pair of force sensors indicated in the Figures as SS1, SS3, and a second pair of force sensors, SS2 and SS4. The force sensors SS1 and SS3 are arranged diametrically opposite to each other on the outer peripheral surface of the pedal-pin. In addition, the force sensors SS2 and SS4 are arranged diametrically opposite to each other on the outer peripheral surface of the pedal-pin, each orthogonal to the sensors SS1 and SS3 of the other pair, so as to be interleaved therewith. In addition, the force sensors each comprise two strain gauges, which are connected to the other two strain gauges of the other diametrically opposite force sensor of the same pair and form therewith a Wheatstone bridge measurement circuit. The arrangement of the strain gauges described in US 2016 0 052 583 A1 on the pedal-pin is therefore such as to occupy the four quadrants of the pin section since the strain gauges are arranged orthogonal to each other on the entire circumference of the section.

US 2016 0 052 583 A1 exhibits a configuration wherein the sensors of each Wheatstone bridge measurement circuit are angularly interposed between the sensors of the other Wheatstone bridge measurement circuit, hence causing the same drawbacks as those of the electronic measuring apparatuses described above.

US 2012 0 173 167 A1 describes a torque meter for pedals wherein the pedal pin has two section planes which are orthogonal to the longitudinal axis of the pin and axially spaced from each other. The strain gauges are arranged around the pin along the circular line of intersection between the section planes and the pin and are arranged at 90° from each other. US 2012 0 173 167 A1 therefore exhibits a configuration wherein the sensors of each measurement circuit are diametrically opposite to each other and therefore angularly occupy the entire circumference of the pin.

Similarly, US 2010 0 024 590 A1 describes a system in which the strain gauges are mounted angularly spaced around the pedal pin so that they occupy the entire circular section.

### DISCLOSURE OF INVENTION

Therefore, the object of the present invention is to provide a pedal equipped with a measuring apparatus which, on the one hand, exhibits a simplified arrangement of the strain gauges of the Wheatstone bridge measurement circuits on the pedal-pin without compromising the accuracy of the measurement and, on the other hand, reduces the space occupied, i.e., the angular distribution of the strain gauges on the pedal-pin.

This object is achieved by the present invention as it relates to a bicycle pedal provided with a measuring apparatus as defined in the appended claims.

### BRIEF DESCRIPTION OF THE DRAWINGS

The present invention will now be described with reference to the accompanying drawings, which illustrate a non-limiting embodiment thereof, wherein:
- Figure 1 shows the diagrams of two Wheatstone bridge measurement circuits of a dual-axis electronic measuring apparatus of a known type,
- Figure 2 shows a pedal-pin on which the strain gauges of the two bridge measurement circuits shown in Figure 1 are arranged in a known way,
- Figures 3 and 4 are the cross sections I-I and II-II, respectively, of the pedal-pin shown in Figure 2,
- Figure 5 is a schematic perspective view of a bicycle pedal provided with a measuring apparatus made according to the teachings of the present invention,
- Figure 6 is an exploded view of the bicycle pedal shown in Figure 5,
- Figure 7 schematically shows a pedal-pin on which strain gauges of a sensor circuit of the measuring apparatus made according to the teachings of the present invention are arranged,
- Figures 8 and 9 are the cross sections I-I and II-II, respectively, of the pedal-pin shown in Figure 7,
- Figure 10 shows two Wheatstone bridge circuits of the measuring apparatus made according to the teachings of the present invention,
- Figure 11 schematically shows an embodiment of the two bridge circuits made according to the teachings of the present invention,
- Figures 12 and 13 are respective alternative embodiments for the positioning of the strain gauges of the two bridge circuits made according to the teachings of the present invention,
- Figure 14 is a perspective view of the pedal-pin and the strain gauges arranged thereon,
- Figure 15 shows two cross sections of a pedal-pin and of the strain gauges according to an alternative embodiment,
- Figure 16 schematically shows an alternative embodiment of one of the two bridge circuits made according to the teachings of the present invention.

### BEST MODE FOR CARRYING OUT THE INVENTION

The present invention will now be described in detail with reference to the accompanying drawings in order to allow a skilled person to implement it and use it.

The present invention is based on the idea of the pedal-pin accommodating the two pairs of strain gauges of each bridge measurement circuit immediately adjacent to one another, rather than in diametrically opposite positions.

In other words, the four strain gauges of each Wheatstone bridge circuit are arranged on the pedal-pin in pairs close to (next to) each other, so as to occupy a single outer surface portion (i.e., one side) of the same, instead of the two opposite (diametrically opposite) portions, which is provided for in the solutions of the state of the art shown in Figures 1 to 4.

The adjacent pairwise positioning of the strain gauges has the technical effect of reducing the space of the outer surface of the pedal-pin engaged/occupied by the strain gauges of the measurement circuits, and thus increasing the free surface available for the positioning of other electrical components and electronic circuits.

Various modifications to the described embodiments will be readily apparent to those skilled in the art and the general principles described may be applied to other embodiments and applications without however departing from the protective scope of the present invention as defined in the appended claims. Therefore, the present invention should not be regarded as limited to the embodiments described and illustrated herein, but they must be given the broadest protective scope consistent with the principles and features described and claimed herein.

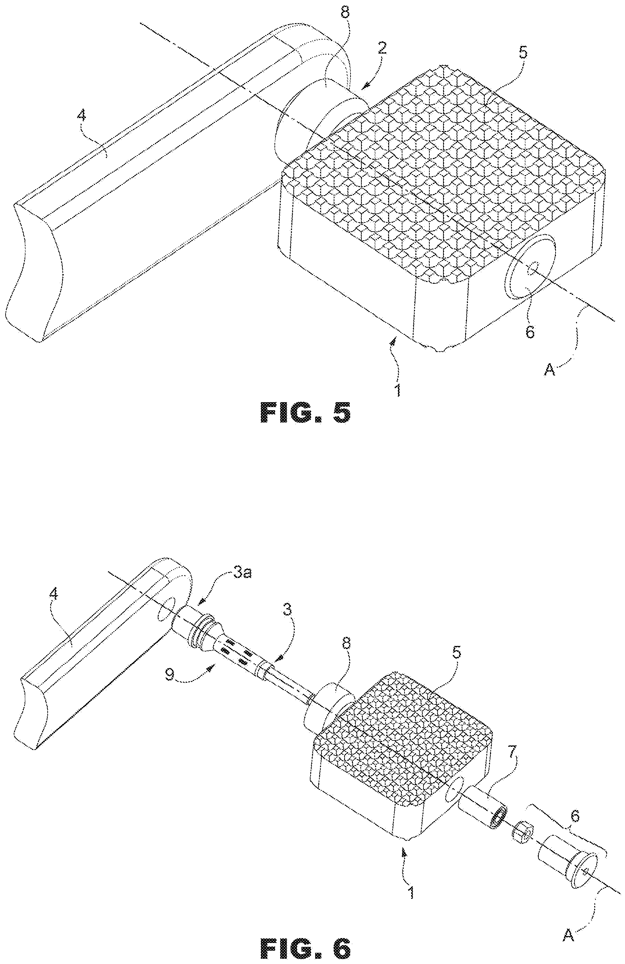

With reference to Figures 5 and 6, number 1 indicates, as a whole, a bicycle pedal provided with an electronic measuring apparatus 2, which is designed to measure electrical quantities indicative of a cyclist's pedal stroke.

The pedal 1 comprises a pedal-pin 3, which extends along a longitudinal reference axis A and is structured to be coupled to a pedal crank 4 of a bicycle (not shown). The pedal 1 also comprises a pedal-body 5, which is coupled in a freely rotatable manner to the pedal-pin 3, for example via an internal bearing 7 (or similar mechanical members) coaxial with the axis A, so that it can rotate around the axis A with respect to the pedal-pin 3.

The pedal-pin 3 can have one end 3a, which is preferably threaded, coupled to the corresponding pedal crank 4. The pedal-pin 3 can have an elongated, preferably tubular shape and can extend cantilevered from the end of the pedal crank 4 along the axis A orthogonal to the pedal crank 4. The pedal-pin 3 can also be provided with bolts 6 and/or similar mechanical members, screwed on the other end of the pedal-pin 3 (opposite the 3a) to prevent the pedal-body 5 from axially slipping off of the pedal-pin 3.

With reference to Figures 5 and 6, the measuring apparatus 2 is configured to provide electrical measurement signals indicative of the deformation of the pedal-pin 3 caused by the force exerted by the cyclist on the pedal 1 during pedalling. The measuring apparatus 2 is configured so as to measure and output physical quantities indicative of the cyclist's pedal stroke, i.e., it communicates them to other electronic apparatuses (not shown), for example user interface devices, in the form of data or signals preferably sent via radio frequency signals.

According to a preferred embodiment, the measuring apparatus 2 is preferably configured to measure a physical quantity corresponding to the mechanical power/force exerted by the cyclist on the pedal 1. However, it should be understood that the present invention is not limited to the measurement of the physical quantity corresponding to the mechanical power/force exerted by the cyclist on the pedal 1, rather, alternatively and/or additionally, it can comprise the measurement/determination of other physical quantities generally associated with the movement made by the pedal 1 under the thrust of the foot. These physical quantities may comprise, for example, the angular speed/cadence of the pedal 1, the torque, the angular position of the pedal crank 4, the angular acceleration of the pedal 1, and/or the like.

In the example shown in Figure 5, the measuring apparatus 2 also comprises a sensor circuit 9 designed to provide electrical signals indicative of the measured deformation. Preferably, the measuring apparatus 2 also comprises a processing circuit 10, which processes the electrical signals provided by the sensor circuit 9, and preferably a power supply circuit 11 which supplies voltage/current to the measuring apparatus 2. The processing circuit 10 may furthermore preferably also comprise a wireless communication circuit (radio frequency) (not shown). The power supply circuit 11 can preferably comprise a battery and/or an electric generator that can be operated by the rotational movement of the pedal body 5 around the axis A.

According to an exemplary embodiment shown in Figures 5 and 6, the measuring apparatus 2 can also comprise an outer protective casing or shell 8 which is fitted on the pedal-pin 3. Preferably, the outer protective shell 8 can be arranged approximately beside the pedal body 5. Preferably, the outer protective shell 8 can be made of polymeric (plastic) material and contain the sensor circuit 9. According to a possible embodiment, the processing circuit 10 and/or the power supply circuit 11 are arranged inside (contained in) the outer protective shell 8. In particular, the outer protective shell 8 can be made as described in Italian patent no. 1428062 and/or in Italian patent application no. 02017000052407.

However, it should be understood that the present invention is not limited to a measuring apparatus 2 comprising an outer protective shell 8, but other embodiments can be envisaged. For example, according to another embodiment, not shown, the measuring apparatus 2 is devoid of the outer protective shell 8, and the sensor circuit 9, the processing circuit 10 and the power supply circuit 11 are arranged on/in the portion of the pedal-pin 3 which is engaged inside the pedal-body 5, so that they are surrounded and therefore protected by it.

According to another embodiment, not shown, the measuring apparatus 2 is devoid of the outer protective shell 8, the sensor circuit 9 is arranged on/in the portion of the pedal-pin 3 engaged inside the pedal body 5, so that it is surrounded and therefore protected by it, whereas the processing circuit 10 and/or the power supply circuit 11 can be completely or partially arranged inside the pedal-pin 3, preferably in suitable seats for housing the circuits.

According to a possible embodiment of the present invention, the processing circuit 10 and/or the power supply circuit 11 can be conveniently made as described in Italian patent no. 1428062 or as described in Italian patent application no. 02017000052407. However, it should be understood that the present invention is not limited to a processing circuit 10 and/or a power supply circuit 11 made as described in the above Italian patent or Italian application, but other different embodiments can be envisaged.

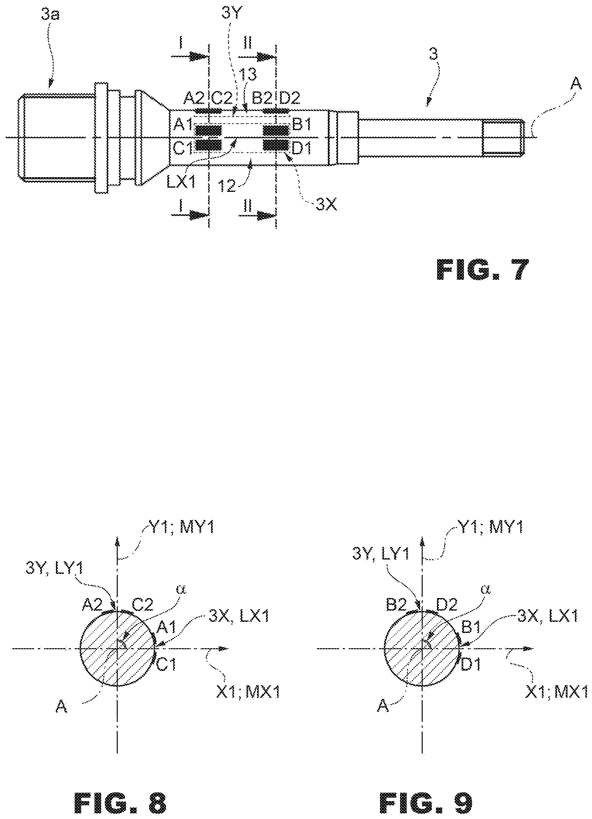

With reference to a preferred embodiment shown in Figures 6-10 and 14, the sensor circuit 9 is adapted to measure the deformation of the pedal-pin 3 caused by the force exerted by the cyclist on said pedal 1 with respect to a measurement axis Y1 and a measurement axis X1. Preferably, the measurement axes Y1 and X1 lie on a plane orthogonal to the axis A and cross the axis A so that they are transverse to each other. According to a preferred exemplary embodiment shown in Figures 8 and 9, the measurement axes Y1 and X1 lie on a plane orthogonal to the axis A and cross the axis A so that they are orthogonal to each other.

The sensor circuit 9 comprises two Wheatstone bridge electrical measurement circuits which are preferably electrically connected to the processing circuit 10 to supply it with the measurement signals indicative of the deformation of the pedal-pin 3 as measured with respect to the axes Y1 and X1, respectively.

The Wheatstone bridge measurement circuits, indicated as 12 and 13, comprise four strain gauges A1, B1, C1, D1 and four strain gauges A2, B2, C2, D2, respectively, firmly arranged on the pedal-pin 3 as described in detail below.

With reference to Figures 7-10, the four strain gauges A1, B1, C1, D1 of the measurement circuit 12 are arranged together (grouped) on an outer surface portion 3X (first portion) of the pedal-pin 3. The four strain gauges A2, B2, C2, D2 of the measurement circuit 13 are arranged together (grouped) on an outer surface portion 3Y (second portion) of the pedal-pin 3, which is angularly spaced around the axis A with respect to the outer surface portion 3X.

The outer surface portions 3X and 3Y of the pedal-pin 3 are angularly spaced from (arranged with respect to) one another around the axis A by an angle α having a width sized so that the four strain gauges A1, B1, C1, D1 of the measurement circuit 12 present on the portion 3X are not interposed between (interleaved with) the strain gauges A2, B2, C2, D2 of the measurement circuit 13. In other words, the outer surface portions 3X and 3Y are angularly arranged on the pedal-pin 3 around the axis A so that they stay within a surface portion whose section orthogonal to the axis A has an angle corresponding to the angle α.

In the example shown, the four strain gauges A1, B1, C1, D1 of the measurement circuit 12 are arranged on the outer surface portion 3X so that they are aligned in pairs along a direction approximately parallel to the axis A.

With reference to the exemplary embodiment shown in Figures 7-9, the pair of strain gauges A1, B1 and the pair of strain gauges C1, D1 are arranged astride a longitudinal plane MX1 of the pedal-pin 3, on opposite sides thereof, so that the strain gauges A1 and B1 of one pair are immediately next to the respective strain gauges C1 and D1, respectively, of the other pair.

In the example shown in the attached Figures, the longitudinal reference axis A and the measurement axis X1 lie on the longitudinal plane MX1. In the example shown, the longitudinal plane MX1 extends radially to the pedal-pin 3 and crosses approximately centrally the outer surface portion 3X (Figures 8 and 9) of the pedal-pin 3.

The pairs of strain gauges A2, B2 and C2, D2 are arranged astride a longitudinal plane MY1 of the pedal-pin 3, on opposite sides thereof, so that the strain gauges A2 and B2 of one pair are immediately next to the respective strain gauges C2 and D2 of the other pair. In the example shown in Figures 7-9, the longitudinal reference axis A and the measurement axis Y1 lie on the longitudinal plane MY1. The longitudinal plane MY1 extends radially to the pedal-pin 3 and crosses approximately centrally the outer surface portion 3Y (Figures 8 and 9).

The outer surface portion 3X housing the four strain gauges A1, B1, C1, D1 and the outer surface portion 3Y housing the four strain gauges A2, B2, C2, D2 are angularly spaced from one another around the axis A by an angle α having a width of less than approximately 150°.

In other words, the first surface portion 3X has a first pair of strain gauges A1 and B1 aligned with each other and parallel to the longitudinal axis A, which is angularly adjacent to (next to/close to) a first pair of strain gauges C2 and D2 of the second surface portion 3Y, and a second (angularly more external) pair of strain gauges C1 and D1 aligned with each other and parallel to the longitudinal axis A, which is angularly spaced from the second (angularly more external) pair of strain gauges A2 and B2 of the second surface portion 3Y by an angle α of less than 150°.

According to a preferred embodiment, the angle α can conveniently range from approximately 70° to approximately 110°, and is preferably 90°, as shown in Figures 8 and 9.

Preferably, according to a possible embodiment wherein the measurement axes X1 and Y1 are orthogonal, the first surface portion 3X has a first pair of strain gauges A1 and B1, which is angularly adjacent to (next to) a first pair of strain gauges C2 and D2 of the second surface portion 3Y, and a second (angularly more external) pair of strain gauges C1 and D1, which is angularly spaced from the second pair of strain gauges A2 and B2 of the second surface portion 3Y by an angle α of approximately 90°.

In the attached Figures, for the sake of greater clarity of the invention, the angle α is represented as the angle between the longitudinal reference planes MX1 and MY1 that cross approximately centrally the two surface portions 3X and 3Y, respectively.

According to a preferred embodiment, the two surface portions 3X and 3Y, respectively, have an approximately rectangular shape and each have a centrally located centre-line plane LX1 and LY1, respectively, parallel to the longitudinal axis A. The centre-line plane LX1 of the surface portion 3X is defined by the intersection of the longitudinal plane MX1 with the surface portion 3X. The centre-line plane LY1 of the surface portion 3Y is defined by the intersection of the longitudinal plane MY1 with the surface portion 3Y.

The two surface portions 3X and 3Y are arranged so that the measurement axis X crosses the centre-line plane LX1, and the measurement axis Y crosses the centre-line plane LY1. In this way, the two surface portions 3X and 3Y are arranged side by side without mutual overlapping.

Preferably, the four strain gauges A1, B1, C1, D1 and A2, B2, C2, D2 are arranged on the pedal-pin 3 approximately at the four vertices of the rectangular surface portions 3X and 3Y, respectively.

According to the preferred embodiment, the surface portion 3X and the second surface portion 3Y of the pedal-pin 3 are angularly arranged side by side and adjacent to each other around the longitudinal axis A.

In the example shown, the pedal-pin 3 has a section transverse to the axis A which is circular, and the rectangular surface portions 3X and 3Y, respectively, each have a section transverse to the axis A which is approximately arched or semi-circular (Figures 8 and 9). In other words, the section of the rectangular surface portions 3X and 3Y, respectively, which is orthogonal to the axis A, forms approximately an arch or a semi-circular segment (Figures 8 and 9).

The two surface portions 3X and 3Y housing the eight strain gauges A1, B1, C1, D1 and A2, B2, C2, D2 are arranged side by side on the pedal-pin 3 so that their section orthogonal to the axis A stays, i.e., is contained within an angle less than or equal to approximately 150° and occupies an arc contained in a semicircle, hence leaving the other semicircle free.

With reference to the attached Figures, the strain gauges A1, B1, C1, D1 are arranged on the surface portion 3X so that they are locally approximately coplanar with each other; the strain gauges A2, B2, C2, D2 are arranged on the surface portion 3Y so that they are locally approximately coplanar with each other.

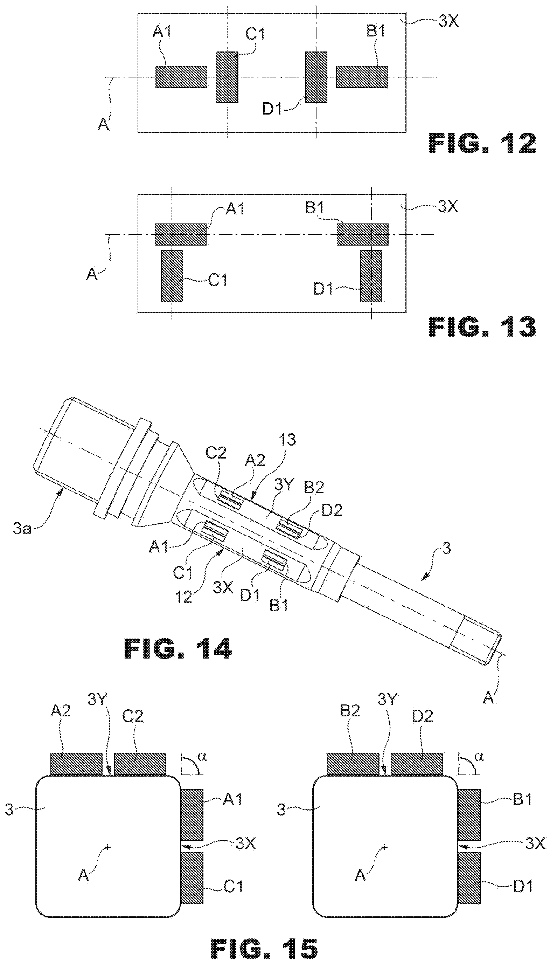

It should be understood that the present invention is not limited to a pedal-pin 3 having a circular cross section, but different shapes can be envisaged, for example a polygonal (octagonal or hexagonal or square or similar) shape in which the edges are preferably rounded. For example, if the pedal-pin 3 has a square cross section, the two rectangular surface portions 3X and 3Y housing the strain gauges A1, B1, C1, D1 and A2, B2, C2, D2 are flat and extend parallel to the axis A. Figure 15 schematically shows an alternative embodiment wherein the pedal-pin 3 has a square cross section, the strain gauges A1 and C1, B1 and D1 are arranged on the rectangular flat surface portion 3X; and the strain gauges A2 and C2, B2 and D2 are arranged on the rectangular flat surface portion 3Y orthogonal to the rectangular surface portion 3X.

With reference to the preferred embodiment shown in the attached Figures, the pair of strain gauges A1, B1 and the pair of strain gauges C1, D1 can be arranged on the surface portion 3X angularly spaced around the axis A by an angle having a width of less than approximately 45°.

Preferably, each of the strain gauges A1 and B1 can be arranged on the surface portion 3X at a distance between approximately 0.5 and approximately 2 mm from the corresponding strain gauges C1 and D1, respectively. Preferably, each strain gauge A1 and C1 can be arranged on the surface portion 3X aligned with the strain gauges B1 and D1, respectively, along a direction parallel to the axis A. Preferably, each strain gauge A1 and C1 can be arranged on the surface portion 3X axially spaced from the corresponding strain gauges B1 and D1, respectively, by a distance between approximately 5 mm and approximately 25 mm (Figure 14).

Preferably, each of the strain gauges A2 and B2 can be arranged on the surface portion 3Y at a distance between approximately 0.5 and approximately 2 mm from the corresponding strain gauges C2 and D2, respectively. Preferably, each strain gauge A2 and C2 can be arranged on the surface portion 3Y aligned with the strain gauges B2 and D2, respectively, along a direction parallel to the axis A. Preferably, each strain gauge A2 and C2 can be arranged on the surface portion 3Y axially spaced from the corresponding strain gauges B2 and D2, respectively, by a distance between approximately 5 mm and approximately 25 mm.

It should be understood that the present invention is not limited to the embodiment shown in Figure 7 wherein the strain gauges A1, B1, C1, D1 and A2, B2, C2, D2 are arranged at the vertices of a rectangle and oriented parallel to the axis A, but other arrangements thereof may be provided within the respective surface portions 3X and 3Y. For example, as shown in Figures 12 and 13, an embodiment can be provided wherein the strain gauges A1 and B1 are aligned with each other and parallel to the axis A, whereas the strain gauges C1 and D1 are arranged parallel to each other and orthogonal to the axis A.

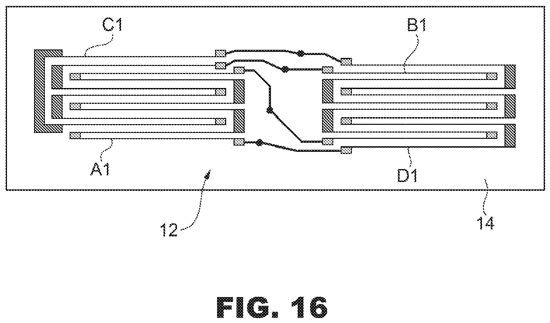

It is understood that other arrangements of the pairs of strain gauges are possible. For example, one embodiment comprises positioning the strain gauges on the pedal-pin 3 so that the electrical branches of a strain gauge are interleaved with (interposed between) the electrical branches of the other strain gauge belonging to the same measurement circuit 12 (or 13). In particular, Figure 16 shows an exemplary embodiment of the measurement circuit 12 wherein the strain gauges A1, B1, C1, D1 have an approximately comb-like geometry wherein the major rectilinear branches are parallel to each other and to a direction parallel to the longitudinal axis A. In particular, the strain gauge A1 has its own major rectilinear branches interleaved with, and adjacent to, (but detached from) the major rectilinear branches of the strain gauge C1, the strain gauge B1 has its own major branches interleaved with, and adjacent to, (but detached from) the major rectilinear branches of the strain gauge D1. Each pair of interleaved strain gauges A1-C1 is also aligned with the other pair of interleaved strain gauges B1-D1 and is axially spaced from it along a direction parallel to the axis A.

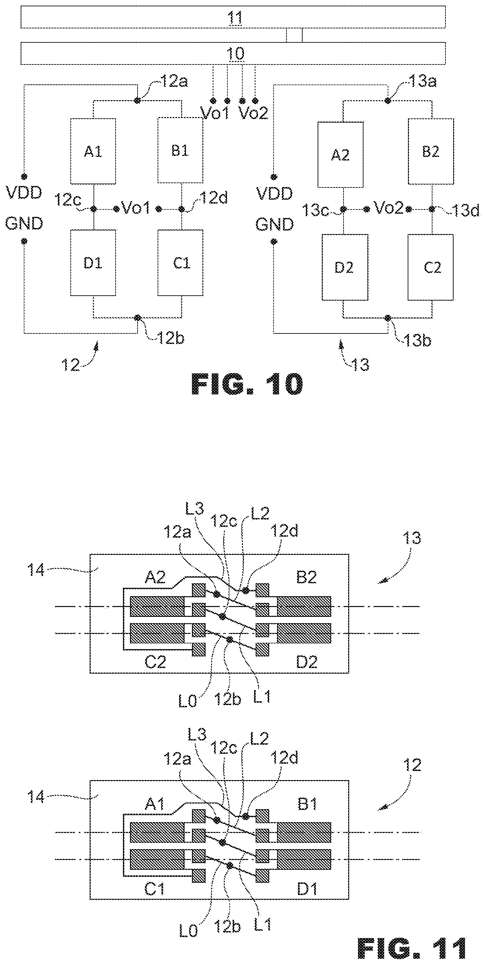

According to a preferred embodiment shown in Figure 10, the measurement circuit 12 comprises two resistor branches connected in parallel between two nodes 12a and 12b, one of which comprises the strain gauges A1 and D1 connected in series to each other via an intermediate node 12c, whereas the other resistor branch comprises the strain gauges B1 and C1 connected in series to each other via an intermediate node 12d. The nodes 12a and 12b are set at a predetermined supply voltage VDD which supplies the measurement circuit 12, whereas the nodes 12c and 12d provide a measurement voltage V01 indicative of the electrical imbalance of the bridge circuit 12, which occurs in response to the resistive variations of the strain gauges A1, B1, C1, D1 caused by the deformation of the pedal-pin 3 measured with respect to the axis X1.

According to a preferred embodiment, the measurement circuit 13 comprises two resistor branches connected in parallel between two nodes 13a and 13b, one of which comprises the strain gauges A2 and D2 connected in series to each other via a node 13c, whereas the other resistor branch comprises the strain gauges B2 and C2 connected in series to each other via a node 13d. The nodes 13a and 13b are set at a supply voltage VDD which supplies the measurement circuit 13, whereas the nodes 13c and 13d provide a measurement voltage V02 indicative of the imbalance of the bridge 13, which occurs in response to the resistive variations of the strain gauges A2, B2, C2, D2 caused by the deformation of the pedal-pin 3 measured with respect to the axis Y1.

With reference to the embodiment shown in Figure 11, the measurement circuits 12 and 13 can be conveniently provided on a film 14 which is adapted to be firmly coupled/fixed to the outer surface of the pedal-pin 3.

The Applicant has found that the arrangement of the strain gauges of each group (A1, B1, C1, D1) (A2, B2, C2, D2) in respective surface portions of the pedal-pin 3, that makes them locally approximately coplanar with each other, advantageously allows, in use, the Wheatstone bridge circuit 12 and/or 13 to be completely provided on the film 14, and the film 14 to be firmly coupled onto the outer surface of the pedal-pin 3. For example, the two measurement circuits 12 and 13 can be arranged on a single support film 14, which can be applied to the pedal-pin 3. The two measurement circuits 12 and 13 can also be arranged on two respective separate and distinct films 14, which can be applied to the pedal-pin 3. The Applicant has found that this solution is extremely advantageous since it simplifies both the making of the Wheatstone bridge circuit and its coupling/assembly on the pedal-pin 3. In other words, the positioning of the four strain gauges A1-D1 and/or of the four strain gauges A2-D2 on the film 14 allows the circuit configuration to be compact (of reduced overall dimensions), which also allows the film 14 to include the electrical connections between the strain gauges. In fact, application can be achieved through a simple and quick fixing of the film 14 to the pedal-pin 3.

Figure 11 shows an exemplary embodiment, wherein the two Wheatstone bridge circuits 12 and 13 are provided on two respective films 14; that is, each film 14 includes the strain gauges and their electrical connections. For the sake of simplicity, one of the two bridge measurement circuits will be described, in particular the measurement circuit 12, it being understood that, as shown, the strain gauges of the other measurement circuit 13 and their electrical connections in the film 14 can be conveniently identical to those of the measurement circuit 12.

In this configuration, the two strain gauges A1, C1 and the two strain gauges B1, D1 on the film 14 are arranged at the vertices of a rectangle with a small height, so that the strain gauges are in pairs immediately next to (but detached from) each other and have the respective connection terminals (provided on the film 14) centrally facing each other and connected to each other via connection lines provided on the film 14. In the example shown, the electrical connection lines indicated as L0, L1 and L2 on the film 14 are advantageously arranged in the central space between the two pairs of strain gauges A1, C1 and B1, D1. The line L0 connects a first terminal of the strain gauge D1 to a first terminal of the strain gauge C1 via the node 12b. The connection line L1 is flanked by/adjacent to the connection line L0 and, in turn, connects a first terminal of the strain gauge A1 to the second terminal of the strain gauge D1 via the node 12c. The line L2 is next to the line L1 and connects a first terminal of the strain gauge B1 to the second terminal of the strain gauge A1 via the node 12a. In the example shown, the three connection lines L0, L1 and L2 are adjacent and approximately parallel to each other. A fourth line L3 extends on the film 14, so that it preferably surrounds the pair of strain gauges A1 and C1, and connects the second terminal of the strain gauge B1 to the second terminal of the strain gauge C1 via the node 12d.

According to a different embodiment, the strain gauges A1, B1, C1 and D1 and their electrical connections, i.e., the circuit 12 shown in Figure 11, can be applied directly to the surface portion 3X of the pedal-pin 3 without gluing, by means of vapour deposition techniques which involve the use of thin-film strain gauges. In particular, the strain gauges A1, B1, C1 and D1 and their connections can be of the thin-film type and be firmly fixed to the one side of the pedal-pin by means of vapour deposition techniques which involve, for example, molecular/atomic vapour deposition, without adhesives/glues. Since the four strain gauges A1, B1, C1 and D1 forming the measurement circuit 12 are adjacent and therefore occupy the same side/face of the pedal-pin 3 (not two diametrically opposite faces), their electrical connection is also simplified both by the embodiment which involves the use of a support film to be glued to the pedal-pin, and by the embodiment which involves the fixing to the pedal-pin 3 by means of vapour deposition techniques. In this way, the electrical connections of the measurement circuits 12 and 13 can be completed by connecting each circuit bridge-wise so that they receive the power supply (Vdd) and provide the output signal (V01,V02).

Figure 11 therefore shows a convenient embodiment wherein the connections made on the film 14 are shown. It is understood that, if the thin-film vapour deposition technology is used, the connections between the strain gauges A1, B1, C1 and D1 (and similarly those between A2, B2, C2 and D2) are also conveniently made automatically during the making of the circuit.

It should be noted that the particular arrangement of the connections of the four strain gauges A1, B1, C1 and D1 shown in Figure 11 allows the signal to be maintained highly accurate even if the four strain gauges are positioned on the same surface portion, hence on the same "side" of the pedal-pin 3. In fact, the Applicant has found that the connections described above allow all four strain gauges to be used, and thus high measurement sensitivity. Furthermore, the grouping of the eight strain gauges on two portions of the pedal-pin 3 clears a relevant part of the surface of the pedal-pin 3, which can therefore be used for the installation of other electronic circuits, such as, for example, the processing circuit 10 and/or the power supply circuit 11, thus causing a reduction in the overall dimensions of the measuring apparatus 2.

It should also be pointed out that the space occupied by the measurement circuits 12 and 13 of the sensor circuit 9 applied around the pedal-pin 3 must be as small as possible so that the internal part of the pedal body 5 which rotates around the pedal-pin 3 has the smallest possible diameter. In this case, the smaller the distance between the centre of the pedal-pin and where the shoe rests on the pedal body (stack height), the better the pedalling efficiency.

According to a preferred alternative embodiment, not shown, the pedal-pin 3 comprises a body, for example, a cylindrical body with a variable diameter, which extends along the axis A and has one or more tubular portions defining tubular (for example, internal cylindrical) seats, and an insert, for example, a cylindrical insert which is fitted/engaged in an internal tubular seat of the tubular body. The insert is made of an easily deformable material and is sized so that at least a part of its outer surface is in contact with the inner wall of the tubular seat that houses it. In this way, the deformation of the external body of the pedal-pin 3 caused by pedalling, along the axes X1 and Y1, is transmitted to the internal insert which becomes deformed much as the body itself. In this embodiment, the surface portions X1 and Y1 housing the measurement bridges 12 and 13 instead of being obtained on the external surface of the elongated body of the pedal-pin 3, are obtained on the external surface of the insert. In other words, the four strain gauges A1, B1, C1, D1 of the measurement circuit 12 and the four strain gauges A2, B2, C2, D2 of the measurement circuit 13 are arranged grouped together, according to the arrangements described above, on the surface portion 3X and on the surface portion 3Y of the outer surface of the internal insert. Preferably, the insert has a cylindrical shape and is made of an elastomeric or similar material. In this case, the four strain gauges A1, B1, C1, D1 of the measurement circuit 12 can be arranged on the surface portion 3X of the insert which extends approximately parallel to the longitudinal axis A and has a centre-line plane LX1 that is crossed by the measurement axis X; the four strain gauges A2, B2, C2, D2 of the measurement circuit 13 are arranged on the outer surface portion 3Y of the insert which extends approximately parallel to the longitudinal axis A approximately alongside the surface portion 3X and has a centre-line plane LY1 that is crossed by the second measurement axis Y1. It is understood that the configurations and features described for the preferred embodiment shown in Figures from 5 to 15, wherein the two Wheatstone bridge measurement circuits 12 and 13 are arranged on the outer surface of the pedal-pin 3, can be applied to the solution wherein, as an alternative, the two Wheatstone bridge measurement circuits 12 and 13 are arranged on the outer surface of the insert.

The above-described pedal measurement apparatus exhibits a simplified arrangement of the strain gauges of the Wheatstone bridge measurement circuits on the pedal-pin, without compromising the accuracy of the measurement and reducing the space of the pedal-pin occupied by the measurement circuits.

Lastly, it is clear that the pedal described and illustrated above can be subject to modifications and variations without however departing from the scope of the present invention, as defined in the appended claims.

## Claims

1. A bicycle pedal (1) comprising:
a pedal-pin (3) which extends along a longitudinal reference axis (A) and has a first axial end (3a) structured to be coupled to a pedal crank (4) of a bicycle,
a pedal-body (5) coupled in a freely rotatable manner on said pedal-pin (3) so as to rotate around said longitudinal axis (A),
a measuring apparatus (2) provided with a sensor circuit (9) configured so as to measure the deformation of the pedal-pin (3) caused by the force exerted by the cyclist on said pedal (1) with respect to a first measurement axis (X1) and a second measurement axis (Y1) which lie on a plane orthogonal to the longitudinal axis (A) and are transversal to one another,
said sensor circuit (9) comprises
a first Wheatstone bridge measurement circuit (12) comprising four strain gauges (A1,B1,C1,D1),
a second Wheatstone bridge measurement circuit (13) comprising four strain gauges (A2,B2,C2,D2),
the four strain gauges (A1,B1,C1,D1) of the first Wheatstone bridge measurement circuit (12) are arranged in pairs, one next to the other, on a first surface portion (3X) of said pedal-pin (3) which has an approximately rectangular shape and has a first centre-line (LX1) which extends parallel to the longitudinal axis (A) and is traversed by said first measurement axis (X1),
the four strain gauges (A2,B2,C2,D2) of the second Wheatstone bridge measurement circuit (13) are arranged in pairs, one next to the other, on a second surface portion (3Y) of said pedal-pin (3) which has an approximately rectangular shape and has a second centre-line (LY1) which extends parallel to the longitudinal axis (A) and is traversed by said second measurement axis (Y1),
the four strain gauges (A1,B1,C1,D1) of the first Wheatstone bridge measurement circuit (12) arranged on the first surface portion (3X) are not angularly interposed between the strain gauges (A2,B2,C2,D2) of the second Wheatstone bridge measurement circuit (13), arranged on the second surface portion (3Y),
said pedal (1) **characterised in that**:
said first surface portion (3X) and said second surface portion (3Y) housing the eight strain gauges (A1, B1, C1, D1) (A2, B2, C2, D2) are arranged side by side on said pedal-pin (3) so that their section orthogonal to the longitudinal reference axis (A) is contained within an angle less than 150° and occupies an arc contained in a semicircle in order to leave the other semicircle free from strain gauges and/or Wheatstone bridges,
said first surface portion (3X) and said second surface portion (3Y) of said pedal-pin (3) are angularly arranged, one next to the other and adjacent around said longitudinal axis (A).

2. The pedal according to claim 1, wherein said first surface portion (3X) and said second surface portion (3Y) of the pedal-pin (3) are angularly spaced from one another around said longitudinal axis (A) by an angle (α) having a width of less than 150°.

3. The pedal according to any one of the foregoing claims, wherein the first surface portion (3X) has a first pair of strain gauges (A1)(B1) aligned with each other and parallel to the longitudinal axis (A), which are angularly adjacent to a first pair of strain gauges (C2) (D2) of the second surface portion (3Y), and a second pair of strain gauges (C1)(D1) aligned with each other and parallel to the longitudinal axis (A), which are angularly spaced from the second pair of strain gauges (A2)(B2) of the second surface portion (3Y) by an angle (α) of less than 150°.

4. The pedal according to any one of the preceding claims, wherein the first surface portion (3X) and the second surface portion (3Y) which house said eight strain gauges (A1, B1, C1, D1) (A2, B2, C2, D2) are angularly arranged side by side on the pedal-pin (3) around the longitudinal axis (A), so that they stay within an angle less than or equal to approximately 150° and occupy one arc contained in a semicircle, hence leaving the other semicircle free.

5. The pedal according to any one of the preceding claims, wherein said first measurement axis (X1) and said second measurement axis (Y1) are orthogonal to each other,
said first surface portion (3X) and said second surface portion (3Y) of the pedal-pin (3) are angularly spaced from one another by an angle (α) of approximately 90° around said longitudinal axis (A).

6. The pedal according to claim 5, wherein the first surface portion (3X) has a first pair of strain gauges (A1)(B1) aligned with each other and parallel to the longitudinal axis (A), which are angularly adjacent to a first pair of strain gauges (C2) (D2) of the second surface portion (3Y), and a second pair of strain gauges (C1)(D1) aligned with each other and parallel to the longitudinal axis (A), which are angularly spaced from the second pair of strain gauges (A2)(B2) of the second surface portion (3Y) by an angle less than or equal to 90°.

7. The pedal according to any one of the claims 5 or 6, wherein the first surface portion (3X) and the second surface portion (3Y) which house the eight strain gauges (A1, B1, C1, D1) (A2, B2, C2, D2) are angularly arranged side by side on the pedal-pin (3) around the longitudinal axis (A), so that they stay within an angle less than or equal to approximately 90° and occupy an arc contained in a semicircle, hence leaving the other semicircle free.

8. The pedal according to any one of the preceding claims, wherein:
the four strain gauges (A1,B1,C1,D1) of the first Wheatstone bridge measurement circuit (12) are arranged grouped on the first surface portion (3X) in approximately coplanar and contiguous/adjacent positions but separated from each other, and/or
the four strain gauges (A2,B2,C2,D2) of the second Wheatstone bridge measurement circuit (13) are arranged on the second surface portion (3Y) in approximately coplanar and contiguous/adjacent positions but separated from each other.

9. The pedal according to any one of the preceding claims, wherein:
the strain gauges (A1,B1,C1,D1) of the first Wheatstone bridge measurement circuit (12) are aligned with each other in pairs (A1,B1) (C1,D1) along a direction parallel to the longitudinal reference axis (A),
the strain gauges (A2,B2,C2,D2) of the second Wheatstone bridge measurement circuit (13) are aligned with each other in pairs (A2,B2) (C2,D2) along a direction parallel to the longitudinal reference axis (A).

10. The pedal according to any one of the preceding claims, wherein:
the strain gauges (A1,B1,C1,D1) of the first Wheatstone bridge measurement circuit (12) are interleaved with each other in pairs (A1,C1) (B1,D1) and each pair (A1,C1) is axially spaced from the other pair (B1,D1) along a direction parallel to said longitudinal reference axis (A),
the strain gauges (A2,B2,C2,D2) of the second Wheatstone bridge measurement circuit (13) are interleaved with each other in pairs (A2,C2) (B2,D2) and each pair (A2,C2) is axially spaced from the other pair (B2,D2) along a direction parallel to said longitudinal reference axis (A).

11. The pedal according to the claim 9 or 10, wherein each of the two Wheatstone bridge circuits (12)(13) comprises two resistor branches connected in parallel to one another and each comprising two strain gauges (A1,D1)(B1,C1)(A2,D2)(B2,C2) which are connected in series to one another along the respective branch and are arranged on the pedal-pin (3) spaced from each other along said longitudinal reference axis (A) in non-adjacent positions.

12. The pedal according to any one of the preceding claims, wherein said pedal-pin (3) comprises an approximately cylindrical shaped elongated body which extends along said longitudinal axis (A); said first surface portion (3X) housing said four strain gauges (A1,B1,C1,D1) of said first Wheatstone bridge measurement circuit (12) and said second surface portion (3Y) housing said four strain gauges (A2,B2,C2,D2) of said second Wheatstone bridge measurement circuit (13) are made on the outer surface of said approximately cylindrical body.

13. The pedal according to any one of the claims from 1 to 11, wherein said pedal-pin (3) comprises an approximately cylindrical shaped elongated body which extends along said longitudinal axis (A) and is provided with at least one tubular portion extending along said longitudinal axis (A), and an insert arranged in said tubular portion of said body; said first surface portion (3X) housing said four strain gauges (A1,B1,C1,D1) of said first Wheatstone bridge measurement circuit (12) and said second surface portion (3Y) housing said four strain gauges (A2,B2,C2,D2) of said second Wheatstone bridge measurement circuit (13) are made on the outer surface of said insert.

14. The pedal according to any one of the preceding claims, wherein the four strain gauges (A1, B1, C1, D1) of the first Wheatstone bridge measurement circuit (12) are arranged on the pedal-pin (3) approximately at the four vertices of the first rectangular surface portion (3X), and the four strain gauges (A2, B2, C2, D2) of the second Wheatstone bridge measurement circuit (13) are arranged on the pedal-pin (3) approximately at the four vertices of the second rectangular surface portion (3Y).

## Patentansprüche

1. Fahrradpedal (1), umfassend:
einen Pedalstift (3), der sich entlang einer Längsbezugsachse (A) erstreckt und ein erstes axiales Ende (3a) aufweist, das strukturiert ist, mit einer Pedal- bzw. Tretkurbel (4) eines Fahrrads gekoppelt zu sein,
einen Pedalkörper (5), der frei drehbar an dem Pedalstift (3) gekoppelt ist, um sich um die Längsachse (A) zu drehen,
eine Messvorrichtung (2), die mit einer Sensorschaltung (9) versehen ist, die konfiguriert ist, die Verformung des Pedalstifts (3) zu messen, die durch die vom Radfahrer auf das Pedal (1) ausgeübte Kraft in Bezug auf eine erste Messachse (X1) und eine zweite Messachse (Y1) bewirkt wird, die auf einer Ebene orthogonal zu der Längsachse (A) liegen und quer zueinander sind, wobei die Sensorschaltung (9) umfasst
eine erste Wheatstonesche Brückenmessschaltung (12) mit vier Dehnungsmessstreifen (A1, B1, C1, D1),
eine zweite Wheatstonesche Brückenmessschaltung (13) mit vier Dehnungsmessstreifen (A2, B2, C2, D2),
wobei die vier Dehnungsmessstreifen (A1, B1, C1, D1) der ersten Wheatstoneschen Brückenmessschaltung (12) paarweise nebeneinander an bzw. auf einem ersten Flächen- bzw. Oberflächenabschnitt (3X) des Pedalstifts (3) angeordnet sind, der eine nahezu rechteckige Form aufweist und eine erste Mittellinie (LX1) aufweist, die sich parallel zu der Längsachse (A) erstreckt und von der ersten Messachse (X1) durchquert wird,
wobei die vier Dehnungsmessstreifen (A2, B2, C2, D2) der zweiten Wheatstoneschen Brückenmessschaltung (13) paarweise nebeneinander an bzw. auf einem zweiten Flächen- bzw. Oberflächenabschnitt (3Y) des Pedalstifts (3) angeordnet sind, der eine nahezu rechteckige Form aufweist und eine zweite Mittellinie (LY1) aufweist, die sich parallel zu der Längsachse (A) erstreckt und von der zweiten Messachse (Y1) durchquert wird,
wobei die vier Dehnungsmessstreifen (A1, B1, C1, D1) der ersten Wheatstonesches Brückenmessschaltung (12), die an dem ersten Flächenabschnitt (3X) angeordnet sind, nicht winklig zwischen den Dehnungsmessstreifen (A2, B2, C2, D2) der zweiten Wheatstoneschen Brückenmessschaltung (13) angeordnet sind, die an dem zweiten Flächenabschnitt (3Y) angeordnet sind,
wobei das Pedal (1) **dadurch gekennzeichnet ist, dass**:
der erste Flächenabschnitt (3X) und der zweite Flächenabschnitt (3Y), die die acht Dehnungsmessstreifen (A1, B1, C1, D1) (A2, B2, C2, D2) beherbergen, Seite an Seite an bzw. auf dem Pedalstift (3) angeordnet sind, so dass ihr Abschnitt bzw. Schnitt orthogonal zu der Längsbezugsachse (A) in einem Winkel von weniger als 150° enthalten ist und einen in einem Halbkreis enthaltenen Bogen einnimmt, um den anderen Halbkreis frei von Dehnungsmessstreifen und/oder Wheatstone-Brücken zu lassen,
der erste Flächenabschnitt (3X) und der zweite Flächenabschnitt (3Y) des Pedalstifts (3) winklig angeordnet sind, und zwar nebeneinander und angrenzend bzw. benachbart um die Längsachse (A) herum.

2. Pedal nach Anspruch 1, wobei der erste Flächenabschnitt (3X) und der zweite Flächenabschnitt (3Y) des Pedalstifts (3) um die Längsachse (A) um einen Winkel (α) mit einer Breite von weniger als 150° winklig voneinander beabstandet sind.

3. Pedal nach einem der vorhergehenden Ansprüche, wobei der erste Flächenabschnitt (3X) ein erstes Paar Dehnungsmessstreifen (A1) (B1) miteinander ausgerichtet und parallel zu der Längsachse (A), die winklig angrenzend bzw. benachbart zu einem ersten Paar Dehnungsmessstreifen (C2) (D2) des zweiten Flächenabschnitts (3Y) sind, und ein zweites Paar Dehnungsmessstreifen (C1) (D1) miteinander ausgerichtet und parallel zu der Längsachse (A) aufweist, die von dem zweiten Paar Dehnungsmessstreifen (A2) (B2) des zweiten Flächenabschnitts (3Y) um einen Winkel (α) von weniger als 150° winklig beabstandet sind.

4. Pedal nach einem der vorhergehenden Ansprüche, wobei der erste Flächenabschnitt (3X) und der zweite Flächenabschnitt (3Y), die die acht Dehnungsmessstreifen (A1, B1, CI, D1) (A2, B2, C2, D2) beherbergen, winklig Seite an Seite an dem Pedalstift (3) um die Längsachse (A) herum angeordnet sind, so dass sie innerhalb eines Winkels kleiner oder gleich etwa 150° bleiben und einen in einem Halbkreis enthaltenen Bogen einnehmen, wodurch der andere Halbkreis frei bleibt.

5. Pedal nach einem der vorhergehenden Ansprüche, wobei die erste Messachse (X1) und die zweite Messachse (Y1) orthogonal zueinander sind,
der erste Flächenabschnitt (3X) und der zweite Flächenabschnitt (3Y) des Pedalstifts (3) um die Längsachse (A) um einen Winkel (α) von etwa 90° winklig voneinander beabstandet sind.

6. Pedal nach Anspruch 5, wobei der erste Flächenabschnitt (3X) ein erstes Paar Dehnungsmessstreifen (A1) (B1) miteinander ausgerichtet und parallel zu der Längsachse (A), die winklig angrenzend bzw. benachbart zu einem ersten Paar Dehnungsmessstreifen (C2) (D2) des zweiten Flächenabschnitts (3Y) sind, und ein zweites Paar Dehnungsmessstreifen (C1) (D1) miteinander ausgerichtet und parallel zu der Längsachse (A) aufweist, die von dem zweiten Paar Dehnungsmessstreifen (A2) (B2) des zweiten Flächenabschnitts (3Y) um einen Winkel kleiner oder gleich 90° winklig beabstandet sind.

7. Pedal nach einem der Ansprüche 5 oder 6, wobei der erste Flächenabschnitt (3X) und der zweite Flächenabschnitt (3Y), die die acht Dehnungsmessstreifen (A1, B1, Cl, D1) (A2, B2, C2, D2) beherbergen, winklig Seite an Seite an dem Pedalstift (3) um die Längsachse (A) herum angeordnet sind, so dass sie innerhalb eines Winkels kleiner oder gleich etwa 90° bleiben und einen in einem Halbkreis enthaltenen Bogen einnehmen, wodurch der andere Halbkreis frei bleibt.

8. Pedal nach einem der vorhergehenden Ansprüche, wobei:
die vier Dehnungsmessstreifen (A1, B1, C1, D1) der ersten Wheatstoneschen Brückenmessschaltung (12) gruppiert an bzw. auf dem ersten Flächenabschnitt (3X) in annähernd koplanaren und zusammenhängenden/benachbarten Positionen, aber voneinander getrennt, angeordnet sind, und/ oder
die vier Dehnungsmessstreifen (A2, B2, C2, D2) der zweiten Wheatstoneschen Brückenmessschaltung (13) an bzw. auf dem zweiten Flächenabschnitt (3Y) in annähernd koplanaren und zusammenhängenden/benachbarten Positionen, aber voneinander getrennt, angeordnet sind.

9. Pedal nach einem der vorhergehenden Ansprüche, wobei:
die Dehnungsmessstreifen (A1, B1, C1, D1) der ersten Wheatstoneschen Brückenmessschaltung (12) paarweise (A1, B1) (C1, D1) entlang einer Richtung parallel zu der Längsbezugsachse (A) miteinander ausgerichtet sind,
die Dehnungsmessstreifen (A2, B2, C2, D2) der zweiten Wheatstoneschen Brückenmessschaltung (13) paarweise (A2, B2) (C2, D2) entlang einer Richtung parallel zu der Längsbezugsachse (A) miteinander ausgerichtet sind.

10. Pedal nach einem der vorhergehenden Ansprüche, wobei:
die Dehnungsmessstreifen (A1, B1, C1, D1) der ersten Wheatstone-Brückenmessschaltung (12) paarweise (A1, C1) (B1, D1) miteinander verschachtelt sind und jedes Paar (A1, C1) axial von dem anderen Paar (B1, D1) entlang einer Richtung parallel zu der Längsbezugsachse (A) beabstandet ist,
die Dehnungsmessstreifen (A2, B2, C2, D2) der zweiten Wheatstoneschen Brückenmessschaltung (13) paarweise (A2, C2) (B2, D2) miteinander verschachtelt sind und jedes Paar (A2, C2) axial von dem anderen Paar (B2, D2) entlang einer Richtung parallel zu der Längsbezugsachse (A) beabstandet ist.

11. Pedal nach Anspruch 9 oder 10, wobei jede der beiden Wheatstoneschen Brückenmessschaltung (12) (13) zwei zueinander parallel geschaltete Widerstandszweige mit jeweils zwei Dehnungsmessstreifen (A1, D1) (B1, C1) (A2, D2) (B2, C2) umfasst, die entlang des jeweiligen Zweigs miteinander in Reihe geschaltet sind und an bzw. auf dem Pedalstift (3) voneinander beabstandet entlang der Längsbezugsachse (A) in nicht benachbarten Positionen angeordnet sind.

12. Pedal nach einem der vorhergehenden Ansprüche, wobei der Pedalstift (3) einen annähernd zylindrisch geformten länglichen Körper umfasst, der sich entlang der Längsachse (A) erstreckt; wobei der erste Flächenabschnitt (3X), der die vier Dehnungsmessstreifen (A1, B1, C1, D1) der ersten Wheatstoneschen Brückenmessschaltung (12) beherbergt, und der zweite Flächenabschnitt (3Y), der die vier Dehnungsmessstreifen (A2, B2, C2, D2) der zweiten Wheatstoneschen Brückenmessschaltung (13) beherbergt, an bzw. auf der Außenfläche bzw. -oberfläche des annähernd zylindrischen Körpers hergestellt sind.

13. Pedal nach einem der Ansprüche 1 bis 11, wobei der Pedalstift (3) einen annähernd zylindrisch geformten länglichen Körper, der sich entlang der Längsachse (A) erstreckt und mit zumindest einem sich rohrförmigen Abschnitt versehen ist, der sich entlang der Längsachse (A) erstreckt, und einen Einsatz umfasst, der in dem rohrförmigen Abschnitt des Körpers angeordnet ist; wobei der erste Flächenabschnitt (3X), der die vier Dehnungsmessstreifen (A1, B1, C1, D1) der ersten Wheatstoneschen Brückenmessschaltung (12) beherbergt, und der zweite Flächenabschnitt (3Y), der die vier Dehnungsmessstreifen (A2, B2, C2, D2) der zweiten Wheatstoneschen Brückenmessschaltung (13) beherbergt, an bzw. auf der Außenfläche des Einsatzes hergestellt sind.

14. Pedal nach einem der vorhergehenden Ansprüche, wobei die vier Dehnungsmessstreifen (A1, B1, C1, D1) der ersten Wheatstoneschen Brückenmessschaltung (12) an bzw. auf dem Pedal-Stift (3) annähernd an den vier Eckpunkten des ersten rechteckigen Flächenabschnitts (3X) angeordnet sind und die vier Dehnungsmessstreifen (A2, B2, C2, D2) der zweiten Wheatstoneschen Brückenmessschaltung (13) an bzw. auf dem Pedal-Stift (3) annähernd an den vier Eckpunkten des zweiten rechteckigen Flächenabschnitts (3Y) angeordnet sind.

## Revendications

1. Pédale de bicyclette (1) comprenant :
un axe de pédale (3) qui s'étend le long d'un axe longitudinal de référence (A) et a une première extrémité axiale (3a) structurée pour être couplée à une manivelle de pédalier (4) d'une bicyclette,
un corps de pédale (5) couplé d'une manière librement rotative audit axe de pédale (3) afin de tourner autour dudit axe longitudinal (A),
un appareil de mesure (2) prévu avec un circuit de capteur (9) configuré afin de mesurer la déformation de l'axe de pédale (3) provoquée par la force exercée par le cycliste sur ladite pédale (1) par rapport à un premier axe de mesure (X1) et un second axe de mesure (Y1) qui se trouvent sur un plan orthogonal à l'axe longitudinal (A) et sont transversaux l'un par rapport à l'autre,
ledit circuit de capteur (9) comprend :
un premier circuit de mesure en pont de Wheatstone (12) comprenant quatre jauges de contrainte (A1, B1, C1, D1),
un second circuit de mesure en pont de Wheatstone (13) comprenant quatre jauges de contrainte (A2, B2, C2, D2),
les quatre jauges de contrainte (A1, B1, C1, D1) du premier circuit de mesure en pont de Wheatstone (12) sont agencées en paires, l'une à côté de l'autre, sur une première partie de surface (3X) dudit axe de pédale (3) qui a une forme approximativement rectangulaire et a une première ligne centrale (LX1) qui s'étend parallèlement à l'axe longitudinal (A) et est traversée par ledit premier axe de mesure (Xl),
les quatre jauges de contrainte (A2, B2, C2, D2) du second circuit de mesure en pont de Wheatstone (13) sont agencées en paires, l'une à côté de l'autre, sur une seconde partie de surface (3Y) dudit axe de pédale (3) qui a une forme approximativement rectangulaire et a une seconde ligne centrale (LY1) qui s'étend parallèlement à l'axe longitudinal (A) et est traversée par ledit second axe de mesure (Yl),
les quatre gauges de contrainte (A1, B1, C1, D1) du premier circuit de mesure en pont de Wheatstone (12) agencées sur la première partie de surface (3X) ne sont pas intercalées de manière angulaire entre les jauges de contrainte (A2, B2, C2, D2) du second circuit de mesure en pont de Wheatstone (13), agencées sur la seconde partie de surface (3Y), ladite pédale (1) étant **caractérisée en ce que** :
ladite première partie de surface (3X) et ladite seconde partie de surface (3Y) logeant les huit jauges de contrainte (A1, B1, C1, D1) (A2, B2, C2, D2) sont agencées côte à côte sur ledit axe de pédale (3) de sorte que leur section orthogonale à l'axe longitudinal de référence (A) est contenue dans un angle inférieur à 150° et occupe un arc contenu dans un demi-cercle afin de laisser l'autre demi-cercle dépourvu de jauges de contrainte et/ou de ponts de Wheatstone,
ladite première partie de surface (3X) et ladite seconde partie de surface (3Y) dudit axe de pédale (3) sont agencées de manière angulaire, l'une à côté de l'autre et adjacentes autour dudit axe longitudinal (A).

2. Pédale selon la revendication 1, dans laquelle ladite première partie de surface (3X) et ladite seconde partie de surface (3Y) de l'axe de pédale (3) sont espacées de manière angulaire l'une de l'autre autour dudit axe longitudinal (A) par un angle (α) ayant une largeur inférieure à 150°.

3. Pédale selon l'une quelconque des revendications précédentes, dans laquelle la première partie de surface (3X) a une première paire de jauges de contrainte (A1) (B1) alignées l'une par rapport à l'autre et parallèles à l'axe longitudinal (A), qui sont angulairement adjacentes à une première paire de jauges de contrainte (C2) (D2) de la seconde partie de surface (3Y), et une seconde paire de jauges de contrainte (C1) (D1) alignées l'une par rapport à l'autre et parallèles à l'axe longitudinal (A), qui sont angulairement espacées de la seconde paire de jauges de contrainte (A2) (B2) de la seconde partie de surface (3Y) par un angle (α) inférieur à 150°.

4. Pédale selon l'une quelconque des revendications précédentes, dans laquelle la première partie de surface (3X) et la seconde partie de surface (3Y) qui logent lesdites huit jauges de contrainte (A1, B1, C1, D1) (A2, B2, C2, D2) sont angulairement agencées côte à côte sur l'axe de pédale (3) autour de l'axe longitudinal (A), de sorte qu'elles restent dans un angle inférieur ou égal à approximativement 150° et occupent un arc contenu dans un demi-cercle, laissant ainsi l'autre demi-cercle libre.

5. Pédale selon l'une quelconque des revendications précédentes, dans laquelle ledit premier axe de mesure (X1) et ledit second axe de mesure (Y1) sont orthogonaux entre eux,
ladite première partie de surface (3X) et ladite seconde partie de surface (3Y) de l'axe de pédale (3) sont angulairement espacées l'une de l'autre par un angle (α) d'approximativement 90° autour dudit axe longitudinal (A).

6. Pédale selon la revendication 5, dans laquelle la première partie de surface (3X) a une première paire de jauges de contrainte (A1) (B1) alignées entre elles et parallèles à l'axe longitudinal (A), qui sont angulairement adjacentes à une première paire de jauges de contrainte (C2) (D2) de la seconde partie de surface (3Y), et une seconde paire de jauges de contrainte (C1) (D1) alignées entre elles et parallèles à l'axe longitudinal (A), qui sont angulairement espacées de la seconde paire de gauges de contrainte (A2) (B2) de la seconde partie de surface (3Y) par un angle inférieur ou égal à 90°.

7. Pédale selon l'une quelconque des revendications 5 ou 6, dans laquelle la première partie de surface (3X) et la seconde partie de surface (3Y) qui logent les huit jauges de contrainte (A1, B1, C1, D1) (A2, B2, C2, D2) sont agencées de manière angulaire côte à côte sur l'axe de pédale (3) autour de l'axe longitudinal (A), de sorte qu'elles restent dans un angle inférieur ou égal à approximativement 90° et occupent un arc contenu dans un demi-cercle, laissant ainsi l'autre demi-cercle libre.

8. Pédale selon l'une quelconque des revendications précédentes, dans laquelle :
les quatre jauges de contrainte (A1, B1, C1, D1) du premier circuit de mesure en pont de Wheatstone (12) sont agencées groupées sur la première partie de surface (3X) dans des positions approximativement coplanaires et contigües/adjacentes mais séparées les unes des autres, et/ou
les quatre jauges de contrainte (A2, B2, C2, D2) du second circuit de mesure en pont de Wheatstone (13) sont agencées sur la seconde partie de surface (3Y) dans des positions approximativement coplanaires et contigües/adjacentes mais séparées les unes des autres.

9. Pédale selon l'une quelconque des revendications précédentes, dans laquelle :
les jauges de contrainte (A1, B1, C1, D1) du premier circuit de mesure en pont de Wheatstone (12) sont alignées entre elles en paires (A1, B1) (C1, D1) le long d'une direction parallèle à l'axe longitudinal de référence (A),
les jauges de contrainte (A2, B2, C2, D2) du second circuit de mesure en pont de Wheatstone (13) sont alignées entre elles en paires (A2, B2) (C2, D2) le long d'une direction parallèle à l'axe longitudinal de référence (A).

10. Pédale selon l'une quelconque des revendications précédentes, dans laquelle :
les jauges de contrainte (A1, B1, C1, D1) du premier circuit de mesure en pont de Wheatstone (12) sont entrelacées entre elles en paires (A1, C1) (B1, D1) et chaque paire (A1, C1) est axialement espacée de l'autre paire (B1, D1) le long d'une direction parallèle audit axe longitudinal de référence (A),
les jauges de contrainte (A2, B2, C2, D2) du second circuit de mesure en pont de Wheatstone (13) sont entrelacées entre elles en paires (A2, C2) (B2, D2) et chaque paire (A2, C2) est axialement espacée de l'autre paire (B2, D2) le long d'une direction parallèle audit axe longitudinal de référence (A).

11. Pédale selon la revendication 9 ou 10, dans laquelle chacun des deux circuits à pont de Wheatstone (12) (13) comprend deux branches de résistance raccordées en parallèle entre elles et chacune comprenant deux jauges de contrainte (A1, D1) (B1, C1) (A2, D2) (B2, C2) qui sont raccordées en série entre elles le long de la branche respective et sont agencées sur l'axe de pédale (3) espacées l'une de l'autre le long dudit axe longitudinal de référence (A) dans des positions non adjacentes.

12. Pédale selon l'une quelconque des revendications précédentes, dans laquelle ledit axe de pédale (3) comprend un corps allongé de forme approximativement cylindrique qui s'étend le long dudit axe longitudinal (A) ; ladite première partie de surface (3X) logeant lesdites quatre jauges de contrainte (A1, B1, C1, D1) dudit premier circuit de mesure en pont de Wheatstone (12) et ladite seconde partie de surface (3Y) logeant lesdites quatre jauges de contrainte (A2, B2, C2, D2) dudit second circuit de mesure en pont de Wheatstone (13) sont réalisées sur la surface externe dudit corps approximativement cylindrique.

13. Pédale selon l'une quelconque des revendications 1 à 11, dans laquelle ledit axe de pédale (3) comprend un corps allongé de forme approximativement cylindrique qui s'étend le long dudit axe longitudinal (A) et est prévu avec au moins une partie tubulaire s'étendant le long dudit axe longitudinal (A), et un insert agencé dans ladite partie tubulaire dudit corps ; ladite première partie de surface (3X) logeant lesdites quatre jauges de contrainte (A1, B1, C1, D1) dudit premier circuit de mesure en pont de Wheatstone (12) et ladite seconde partie de surface (3Y) logeant lesdites quatre jauges de contrainte (A2, B2, C2, D2) dudit second circuit de mesure en pont de Wheatstone (13) sont réalisées sur la surface externe dudit insert.

14. Pédale selon l'une quelconque des revendications précédentes, dans laquelle les quatre jauges de contrainte (A1, B1, C1, D1) du premier circuit de mesure en pont de Wheatstone (12) sont agencées sur l'axe de pédale (3) approximativement aux quatre sommets de la première partie de surface rectangulaire (3X), et les quatre jauges de contrainte (A2, B2, C2, D2) du second circuit de mesure en pont de Wheatstone (13) sont agencées sur l'axe de pédale (3) approximativement aux quatre sommets de la seconde partie de surface rectangulaire (3Y).
